# EUROPÄISCHE PATENTANMELDUNG

(11) **EP 1 102 145 A2**
(43) Veröffentlichungstag der Anmeldung: **23.05.2001**
(21) Anmeldenummer: 00203597.0
(22) Anmeldetag: 16.10.2000
(51) Int. Cl.: G05D 23/02

(54) **Ventil, insbesondere Thermostatventil für Heizungsanlagen**

(30) Priorität: 17.11.1999 DE 19955257
(71) Anmelder: Danfoss A/S, 6430 Nordborg (DK)
(72) Erfinder: Wiwe, Joergen Seindal, 8355 Solbjerg (DK); Garm, Fester, 8600 Silkeborg (DK); Hoelck, Poul, 8330 Beder (DK)

(57) **Zusammenfassung**

Ein Ventil, insbesondere Thermostatventil für Heizungsanlagen, weist ein Gehäuse (40), einen Ventilsitz (54), ein Verschlußstück (55) und eine Anschlußvorrichtung (66) zum Befestigen eines Betätigungsaufsatzes auf. Es gibt eine Anlagefläche (46) in einem ersten Abstand (A) vom freien Ende des Stifts (53) und eine zugehörige erste Spannfläche. Zum Befestigen mindestens eines zweiten Typs eines Betätigungsaufsatzes ist mit dem Gehäuse (40) ein Außengewinde (45) nahe der Anlagefläche (46) verbunden. Es gibt ein Anschlußelement (48), das die Dichtvorrichtung (52), die erste Spannfläche, den Ventilsitz (54) und das Verschlußstück (55) trägt, im Gehäuse (40) aus einer ersten Stellung in mindestens eine zweite Stellung axial verschiebbar ist. Auf diese Weise ist es möglich ein Ventil zu schaffen, das in der Lage ist, wahlweise eines von mindestens zwei Betätigungsaufsätzen zu tragen, ohne daß Zusatzteile verloren gehen könnten.

## Beschreibung

Die Erfindung bezieht sich auf ein Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist.

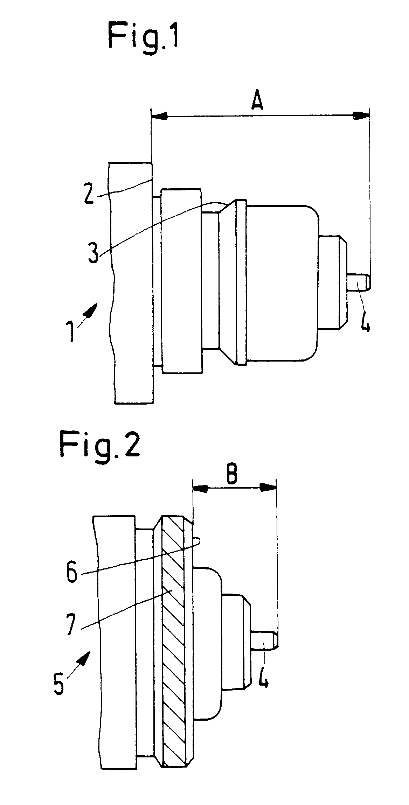

Damit am Ventil ein Betätigungsaufsatz angebracht werden kann, ist am Ventilgehäuses eine Anschlußvorrichtung erforderlich, die dem Typ des Betätigungsaufsatzes entspricht. Die meisten auf dem Markt befindlichen Ventile haben Anschlußvorrichtungen, wie sie in den Fig. 1 und 2 veranschaulicht sind. Bei der eine erste Form aufweisende Anschlußvorrichtung 1 ist eine Anlagefläche 2 vorgesehen, gegen die der Sockel des Betätigungsaufsatzes angepreßt wird, indem eine radiale Kraft an einer konusförmigen Spannfläche 3 in die Axialrichtung umgelenkt wird. Der Abstand A zwischen der Anlagefläche 2 und dem freien Ende des der Betätigung des Verschlußstücks dienenden Stiftes 4 beträgt etwa 30 mm. Ein Beispiel hierfür ist in der DE 32 36 372 C2 veranschaulicht. Bei der eine zweite Form aufweisenden Anschlußvorrichtung 5 ist die Anlagefläche 6 an der Stirnseite einer als Gewinde ausgeführten Spannfläche 7 vorgesehen. Durch Aufschrauben einer mit einem Innenflansch versehenen Überwurfmutter wird der Sockel des Betätigungsaufsatzes gegen die Anlagefläche 6 gedrückt. Die Spannfläche 7 besitzt ein M30 x 1,5 Gewinde. Der Abstand B zwischen der Anlagefläche 6 und dem freien Ende des Ventilstiftes 4 beträgt etwa 10 mm. Ein Beispiel hierfür ist in DE 43 44 773 A1 veranschaulicht. Weitere Anschlußvorrichtungen unterscheiden sich von der Anschlußvorrichtung 5 dadurch, daß der Abstand B etwas größer ist, beispielsweise etwa 20 mm beträgt.

Es ist ferner bekannt (DE 94 11 056 U1), ein und dasselbe Ventil zum Anschluß von zwei oder mehr Typen eines Betätigungsaufsatzes geeignet zu machen, indem ein Adapter, also ein Zusatzbauteil, zwischen Ventil und Betätigungsaufsatz geschaltet wird. Der Heizungsbauer kann daher bei Reparaturarbeiten mit wenigen Ersatzteilen, die er mitführen muß, auskommen. Er kann auch Ventile und Betätigungsaufsätze unterschiedlicher Firmen miteinander kombinieren. Allerdings hat es sich gezeigt, daß die bei einer bestimmten Nutzungsart nicht benötigten Zusatzbauteile oder Adapter zu dem Zeitpunkt, an dem sie benötigt werden, häufig nicht zur Verfügung stehen, sei es daß sie verlorengegangen oder aufgebraucht sind.

Der Erfindung liegt demgegenüber die Aufgabe zugrunde, ein Ventil der eingangs beschriebenen Art anzugeben, das alle Mittel aufweist, um wahlweise einen von mindestens zwei unterschiedlichen Betätigungsaufsatz-Typen anzubringen.

Diese Aufgabe wird erfindungsgemäß dadurch gelöst, daß zum Befestigen mindestens eines zweiten Typs eines Betätigungsaufsatzes mit dem Gehäuse ein Außengewinde nahe der Anlagefläche verbunden ist und ein Anschlußelement, das die Dichtvorrichtung, die erste Spannfläche, den Ventilsitz und das Verschlußstück trägt, im Gehäuse aus einer ersten Stellung in mindestens eine zweite Stellung axial verschiebbar ist.

Durch die Einführung axial verschiebbarer Teile gelingt es, mindestens zwei unterschiedliche Formen zu schaffen, die wahlweise für das Anbringen eines ersten oder zweiten Typs eines Betätigungsaufsatzes geeignet sind. Durch einfaches Verschieben eines Anschlußelements wird die Form der Anschlußvorrichtung einem zweiten Typ eines Betätigungsaufsatzes angepaßt. Es ist sogar möglich, mehr als zwei derartige Formen vorzusehen. Hierbei können weitgehend übliche Ventilbauteile verwendet werden.

Von Vorteil ist es, daß die erste Spannfläche eine Konusfläche ist, die in der ersten Stellung frei liegt und in der zweiten Stellung überdeckt ist. Auf diese Weise kann der größte Teil der auf dem Markt befindlichen Betätigungsaufsätze montiert werden.

Günstig ist es, daß das Außengewinde und die benachbarte Anlagefläche unmittelbar am Gehäuse ausgebildet sind. Dies ergibt nicht nur eine konstruktiv einfache Bauform, sondern erlaubt es auch, die Anlagefläche für die Befestigung sämtlicher Typen von Betätigungsaufsätzen zu verwenden.

Empfehlenswert ist es, daß das Anschlußelement in mindestens zwei Stellungen arretierbar ist. Durch die Arretierung ist sichergestellt, daß die jeweilige Anschlußvorrichtung ihre Form beibehält.

Bei einer bevorzugten Ausführungsform ist dafür gesorgt, daß das Gehäuse gegenüber dem das Außengewinde tragenden Anschlußende einen Stutzen aufweist, der eine Führungsbahn aufweist, daß das Anschlußelement den Stutzen mit einem Fortsatz durchsetzt und mindestens eine Arretierungsvertiefung aufweist, und daß ein Arretierring mindestens einen Arretierstift aufweist, der durch die Führungsbahn in die Arretierungsvertiefung greift. Mit Hilfe der Führungsbahn läßt sich die jeweilige Stellung sicher arretieren.

Hierbei empfiehlt es sich, daß die Führungsbahn Endabschnitte aufweist, die zum Anschlußende hin weisen, und daß das Anschlußelement durch zwei Dichtringe nach außen hin abgedichtet ist, von denen der dem Stutzen zugewandte Dichtring einen kleineren Durchmesser hat. Die unterschiedliche Größe der Dichtringe führt dazu, daß das Anschlußelement durch eine Kraft in Richtung auf das Anschlußende belastet wird. Hierdurch werden die Arretierstifte sicher in den jeweils gewählten Endabschnitten gehalten, können aber durch Einschieben und Verdrehen in eine andere Position gebracht werden.

In manchen Fällen ist es günstig, daß das Anschlußelement außerhalb des Stutzens mit einem Schlauch verbunden ist. Dieser Schlauch gleicht die Schiebebewegung des Anschlußelements aus.

Die Erfindung wird im folgenden anhand eines bevorzugten Ausführungsbeispiels in Verbindung mit der Zeichnung näher beschrieben. Hierin zeigen:
- Fig. 1: eine schematische Darstellung einer Anschlußvorrichtung für einen ersten Typ eines Betätigungsaufsatzes nach dem Stand der Technik,
- Fig. 2: eine schematische Darstellung einer Anschlußvorrichtung für einen zweiten Typ eines Betätigungsaufsatzes gemäß dem Stand der Technik,
- Fig. 3: einen Längsschnitt durch ein erfindungsgemäßes Ventil mit dem Anschlußelement in einer ersten Stellung,
- Fig. 4: einen Längsschnitt ähnlich Fig. 3 mit dem Schiebeteil in einer zweiten Stellung,
- Fig. 5: einen Längsschnitt ähnlich Fig. 3 mit dem Schiebeteil in einer dritten Stellung und
- Fig. 6: eine Hülse mit Führungsbahn.

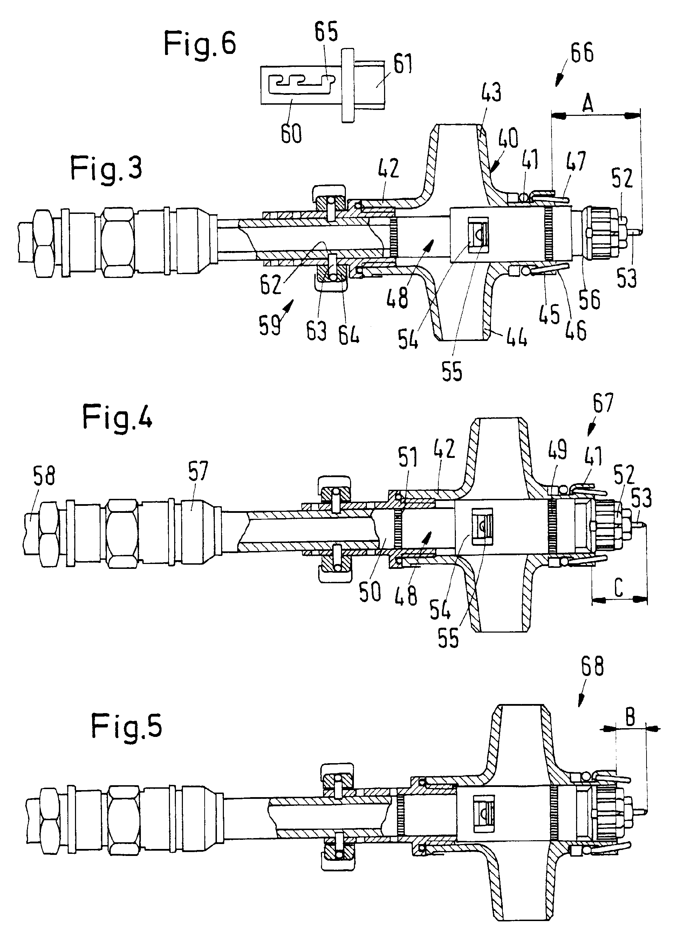

Das in den Fig. 3 bis 6 veranschaulichte Ventil weist ein Gehäuse 40 auf, das ein Anschlußende 41, einen gegenüberliegenden Zufluß-Stutzen 42, und zwei Abflußstutzen 43 und 44 besitzt. Das Gehäuse 40 trägt am Anschlußende 41 ein Außengewinde 45, eine Anlagefläche 46 für den Sockel eines Betätigungsaufsatzes und Stifte 47 zur Drehsicherung wenigstens eines Betätigungsaufsatzes. Das Außengewinde hat die Abmessungen M30 x 1,5 mm.

Im Gehäuse 40 ist ein Anschlußelement 48 angeordnet, das einerseits unter Zwischenschaltung eines Dichtringes 49 in das Anschlußende 41 des Gehäuses 40 greift und andererseits mit einem Fortsatz 50 unter Zwischenschaltung eines Dichtringes 51 den Stutzen 42 durchsetzt. Der Mittelteil des Anschlußelements 48 hat demnach die Form eines abgesetzten Zylinders, der lang genug ist, um in den beiden Endstellungen noch durch die beiden Dichtungen nach außen hin abgedichtet zu sein.

Das Anschlußelement 48 trägt eine Dichtvorrichtung 52, einen Stift 53 zur Ventilbetätigung, einen Ventilsitz 54, ein Verschlußstück 55, eine Konusfläche 56 und weitere übliche Ventilteile, wie Rückstellfeder, Voreinstellvorrichtung für den kv-Wert und dergleichen.

Am Fortsatz 50 ist eine Kupplung 57 angebracht, mit der ein Schlauch 58 angeschlossen werden kann. Die Kupplung 57 kann eine Schnappverbindung aufweisen.

Eine Arretiervorrichtung 49 weist eine Führungsbahn 60 in einer in den Zuflußstutzen 42 eingeschraubten Hülse 61 auf. Der Fortsatz 50 besitzt Arretierungsvertiefungen 62. Arretierstifte 63, die durch einen äußeren Ring 64 gesichert sind, durchsetzen die Führungsbahn 60 und greifen in die Arretiervertiefungen 62 ein. Der Ring 64 kann aus zwei oder mehr Teilen bestehen, die durch einen elastischen Ring zusammengehalten sind. Weil der Dichtring 51 einen kleineren Durchmesser hat als der Dichtring 49, wird im Betrieb des Ventils eine in Richtung auf das Anschlußende wirkende Kraft auf das Anschlußelement 48 ausgeübt. Infolgedessen werden die Arretierstifte sicher in einem Endabschnitt 65 der Führungsbahn 60 gehalten. Durch Axialverschiebung des Anschlußelements 48 in Richtung auf den Einlaßstutzen 42, Drehung um einen vorgegebenen Winkel, weitere Axialverschiebung, sowie Drehung in entgegengesetzter Richtung kommt es zu einer Verlagerung der Arretierstifte 63 und damit zu einer Verstellung des Anschlußelements von einer der in den Figuren gezeigten Stellungen in eine andere in den Figuren gezeigte Stellung.

Bei der Stellung der Fig. 3 wirkt die Konusfläche 56 als Spannfläche für einen Betätigungsaufsatz vom ersten Typ, durch den der Sockel des Aufsatzes gegen die Anlagefläche 46 gedrückt wird. Hierdurch ergibt sich ein Abstand A zwischen der Anlagefläche 46 und dem freien Ende des Stiftes 53 von etwa 30 mm.

Bei den Stellungen den Fig. 4 und 5 ist die Konusfläche 56 vom Gehäuse 40 überdeckt. Wirksam ist nun das Außengewinde 45 in Verbindung mit der Anlagefläche 46. Das Außengewinde dient als Spannfläche, um eine Überwurfmutter mit Innenflansch aufzunehmen, der den Sockel eines Betätigungsaufsatzes vom zweiten und dritten Typ gegen die Anlagefläche 46 drückt. Hier ergibt sich zwischen der Anlagefläche 46 und dem freien Ende des Stifts 53 ein Abstand B von etwa 10 mm bzw. C von etwa 20 mm.

Insgesamt ergeben sich daher drei Anschlußvorrichtungen 66, 67 und 68, die es erlauben, Betätigungsaufsätze von drei verschiedenen Typen anzubringen.

## Patentansprüche

1. Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist, dadurch gekennzeichnet, daß zum Befestigen mindestens eines zweiten Typs eines Betätigungsaufsatzes mit dem Gehäuse (40) ein Außengewinde (45) nahe der Anlagefläche (46) verbunden ist und ein Anschlußelement (48), das die Dichtvorrichtung (52), die erste Spannfläche, den Ventilsitz (54) und das Verschlußstück (55) trägt, im Gehäuse (40) aus einer ersten Stellung in mindestens eine zweite Stellung axial verschiebbar ist.

2. Ventil nach Anspruch 1, dadurch gekennzeichnet, daß die erste Spannfläche eine Konusfläche (56) ist, die in der ersten Stellung frei liegt und in der zweiten Stellung überdeckt ist.

3. Ventil nach Anspruch 1 oder 2, dadurch gekennzeichnet, daß das Außengewinde (45) und die benachbarte Anlagefläche (46) unmittelbar am Gehäuse (40) ausgebildet sind.

4. Ventil nach einem der Ansprüche 1 bis 3, dadurch gekennzeichnet, daß das Anschlußelement (48) in mindestens zwei Stellungen arretierbar ist.

5. Ventil nach Anspruch 4, dadurch gekennzeichnet, daß das Gehäuse (40) gegenüber dem das Außengewinde tragenden Anschlußende (41) einen Stutzen (42) aufweist, der eine Führungsbahn (60) aufweist, daß das Anschlußelement (48) den Stutzen (42) mit einem Fortsatz (50) durchsetzt und mindestens eine Arretierungsvertiefung (62) aufweist, und daß ein Arretierring (64) mindestens einen Arretierstift (63) aufweist, der durch die Führungsbahn (60) in die Arretierungs-Vertiefung (62) greift.

6. Ventil nach Anspruch 5, dadurch gekennzeichnet, daß die Führungsbahn (60) Endabschnitte (65) aufweist, die zum Anschlußende (41) hin weisen, und daß das Anschlußelement (48) durch zwei Dichtringe (49, 51) nach außen hin abgedichtet ist, von denen der dem Stutzen (42) zugewandte Dichtring (51) einen kleineren Durchmesser hat.

7. Ventil nach einem der Ansprüche 1 bis 6, dadurch gekennzeichnet, daß das Anschlußelement (48) außerhalb des Stutzens (42) mit einem Schlauch (58) verbunden ist.
